# NOUVEAU FASCICULE DE BREVET EUROPEEN

(11) **EP 0 326 469 B2**
(45) Date de publication et mention de la décision concernant l'opposition: **17.09.1997**
(45) Mention de la délivrance du brevet: 15.07.1992
(21) Numéro de dépôt: 89400175.9
(22) Date de dépôt: 20.01.1989
(51) Int. Cl.: A23L 1/015, A23L 1/29, A23D 9/00, C11B 3/00, C11B 3/02

(54) **Procédé d'élimination de composés stéroidiques contenus dans une substance d'origine biologique**
Verfahren zur Elimination von steroiden Verbindungen, die in einer Substanz von biologischer Herkunft enthalten sind
Process for the elimination of steroidic compounds which are contained from a substance of biological origin

(30) Priorité: 22.01.1988 FR 8800730
(43) Date de publication de la demande: 02.08.1989
(73) Titulaire: ASTEROL INTERNATIONAL, F-75015 Paris (FR)
(72) Inventeur: Maffrand, Jean-Pierre, F-31120 Portet Sur Garonne (FR); Courregelongue, Jean, 31120 Portet sur Garonne (FR)
(74) Mandataire: Boulinguiez, Didier

(56) Documents cités:
- EP-A- 256 911
- DE-A- 2 035 069
- FR-A- 2 601 959
- FR-A- 2 626 145
- US-A- 2 827 452
- US-A- 3 491 132
- US-A- 4 383 992
- Catalysts in chemistry and enzymology by W.P. Jencks, McGraw-Hill book company, New York, US, pp.393, 408-411
- "Quantitative structure-reactivity analysis of the inclusion mechanism by cyclodextrins", by Yoshihisa Matsui et al, Top. Cuw. Chem. 128, 1985, p. 61-69
- "Expression of ACTH-Induced Corticosteroid..." by M. Hammami et al, Cell Biology and Toxicology, vol. 2, n 1, 1986, pp. 41-52
- Lehrbuch der Lebensmittelchemie von H.D. Belitz et al, 3. Aufl. Springer-Verlag, Berlin, DE, 1987, pp. 189-193
- Data base abstract WPI of JP-A-59135847, Acc. n 84-228326/37, 1984
- "Verdichtete Gase zur Extraction und Raffination" von E. Stahl et al, 3. Aufl., Springer-Verlag, Berlin, DE, 1987, p. 114

## Description

La présente invention concerne un procédé d'élimination de composés stéroïdiques contenus dans une substance d'origine biologique.

Par composés stéroïdiques au sens de la présente invention, on entend principalement les stérols à l'état non estérifié ou sous forme estérifiée et les molécules résultant de leur oxydation.

On sait que les stérols, qui sont des 3 β-hydroxystéroïdes, ont une origine biologique. C'est pourquoi nombre de substances dérivées des animaux ou des plantes en contiennent.

Dans les corps gras préparés à partir d'animaux, le cholestérol, présent principalement sous forme non estérifiée, représente 98 p 100 des stérols. J.P. WOLFF (in Manuel d'Analyse des Corps Gras, Azoulay, Ed., Paris, 1968) a donné les teneurs en stérols ci-après, exprimés en mg pour 100 g de corps gras à l'état brut :

| SAINDOUX | SUIF DE BOEUF | GRAISSE DE CHEVAL | GRAISSE DE SARDINE |
|---|---|---|---|
| 50-120 | 75-140 | 80-120 | 275-500 |

Les corps gras d'origine végétale sont par contre particulièrement pauvres en cholestérol. Mais ils contiennent d'autres stérols en quantité, variable selon leur origine, mais significative (80 à 1200 mg pour 100 g selon J.P WOLFF supra). Parmi ces stérols, ci-après appelés phytostérols, on peut citer : le β-sitostérol, le campéstérol, le stigmastérol, le brassicastérol, le Δ⁷, - stigmasténol, le Δ⁷, - campéstérol, le Δ⁵ - avénasténol, le Δ⁷ - avénasténol, le Δ⁷⁻⁹- stigmatadiénol, le fucostérol et l'ergostérol qui sont les stérols majeurs des principales huiles végétales alimentaires.

On peut aussi citer les oeufs d'oiseaux, chez lesquels la fraction stérolique du jaune comporte essentiellement du cholestérol. Celui-ci représente prés de 5 pour 100 des lipides totaux de l'oeuf de la poule il y est présent sous forme non estérifiée à 84 pour 100 et sous forme estérifiée à 16 pour 100.

On sait aussi que dans ces corps gras ou dans les oeufs, peuvent être détectées des cétones stéroïdiques, résultant de l'oxydation des stérols, ci-après appelées stérones (V.P. FLANAGAN et al, Journal of Lipid Research, 16, 1975, 97-101).

Il faut encore citer d'autres dérivés des stérols, dont la présence est constatée (G. MAERKER, J.A.O.C.S., N° 3, 1987, 388-392 ; S.W. PARK et al, Journal of Food Science, 51, N° 5, 1986, 1380-1381 ; J.M. LUBY, Journal of Food Science, 51, N° 4, 1986, 908-911) tout particulièrement dans les bains de friture alimentaire après de multiples utilisations : il s'agit de dérivés oxygénés comportant des groupes hydroxyles.

Les corps gras d'origine animale ou végétale sont l'objet d'un grand nombre d'applications, utiles pour de nombreux domaines d'activités. Leur traitement peut conduire à l'obtention de produits manufacturés tels que le beurre, qui contient en moyenne de 225 à 350 mg de cholestérol pour 100 g (J.P. WOLFF supra.), les huiles de consommation courante destinées à l'alimentation humaine ou encore le chocolat On connaît également l'importance des oeufs pour la préparation de produits alimentaires.

Des études épidémiologiques (Lipid Research Clinics Program, The Lipid Research Clinics Coronary Primary Prevention Trials, J. Amer. Med. Ass., 1984, 251, 351-374) ont établi une corrélation positive entre les taux élevés de cholestérol plasmatique et les maladies cardio-vasculaires.

On entrevoit également un rôle des dérivés oxygénés à hydroxyles du cholestérol dans certaines pathologies humaines, telles que la formation des plaques d'athérome (S.K PENG et al, Atherosclerosis, 54, 1985, 121-133) et la cancérogénèse. Les stérones pourraient également être impliquées dans les maladies cardiovasculaires.

Ces constatations font apparaître l'opportunité de la mise au point d'un procédé d'élimination permettant de faire diminuer de façon significative la quantité de stérols et de leurs dérivés contenus dans les substances d'origine biologique consommables telles quelles ou dont le traitement conduit à l'obtention de produits alimentaires.

De nombreux travaux ont été réalisés mais aucun d'entre eux n'a conduit à un procédé vraiment satisfaisant : la précipitation à la digitonine, l'extraction par solvant qui peut laisser dans la matière grasse des résidus toxiques ; enfin, l'absorption sur des colonnes et la microdistillation sont des procédés difficiles à mettre en oeuvre industriellement car ils impliquent un matériel lourd et des manipulations complexes et onéreuses.

Dans la demande de brevet européenne antérieure 87 401709.8 publié sous le numéro EP-A-256 911, le déposant a décrit un procédé d'élimination du cholestérol contenu dans une matière grasse d'origine animale par mise en contact de la matière grasse fluidifiée avec une cyclodextrine sous atmosphère non oxydante, sous agitation pendant 30 minutes à 10 heures, à une température comprise entre la température de fusion de la matière grasse et 80°C, de façon à permettre la formation de complexes entre le cholestérol et la cyclodextrine, puis entraînement des complexes dans de l'eau et séparation de la phase aqueuse.

La demanderesse a précisément mis au point un nouveau procédé général utilisable à l'échelle industrielle qui permet l'élimination au moins partielle des stérols et de leurs dérivés contenus dans les substances d'origine biologique. Ce procédé est susceptible de nombreuses applications : il permet notamment la préparation d'aliments à teneur réduite en stérols et en molécules dérivées; il permet accessoirement de disposer de quantités de stérols et de molécules dérivées, pouvant en définitive être traités d'une manière appropriée pour l'obtention de stéroïdes -d'hormones stéroïdiques principalement- utiles en tant que principes actifs de médicaments.

Le procédé selon l'invention met à profit la capacité inhérente aux cyclodextrines de former des complexes d'inclusion avec certaines molécules organiques.

Les cyclodextrines sont des oligosaccharides cycliques constitués d'unités glucopyranose reliées entre elles par une liaison osidique alpha (1 → 4). Elles présente une cavité hydrophobe qui permet la formation de complexes d'inclusion par insertion de molécules. Leur toxicité a aussi été étudiée et on a constaté que l'administration par voie orale de ces cyclodextrines n'a révélé aucun effet toxique chez le rat et chez le chien (J. SZEJTLI, Molecular Entrapment and Release Properties of Drugs by Cyclodextrins, in Controlled Drug Bioavailability, Vol. 3 : V.F. SMOLEN and L.A. BALL, ed. 1985 J. WILEY, p. 365; W. SAENGER, Angew. Chem. Ed. Engl., 1980, 19, 344).

Les cyclodextrines sont actuellement essentiellement utilisées pour complexer des pesticides. On a décrit d'autres applications et notamment leur mise en oeuvre pour extraire des acides gras libres à partir d'huiles végétales (J. SZEJTLI, Die Nahrung, 29, (1985) 9, 911-924) mais leur utilisation pour l'extraction des stérols et de leurs dérivés n'avait pas encore été envisagée.

L'invention a ainsi pour objet un procédé d'élimination de composés stéroïdiques contenus dans une substance d'origine biologique, caractérisé en ce que ladite substance à l'état liquide ou fluidifié est mise en contact avec une cyclodextrine, en milieu aqueux, ce contact est prolongé sous agitation de façon à permettre la formation de complexes entre les composés stéroïdiques et la cyclodextrine, puis lesdits complexes sont séparés, à l'exclusion de son application à l'élimination du cholestérol d'une matière grasse d'origine animale qui serait effectuée sous atmosphère non oxydante, avec un temps de contact de 30 minutes à 10 heures.

Selon un premier mode de réalisation, la cyclodextrine est apportée sous forme libre : il peut s'agir d'une poudre cristalline amorphe ou d'une solution aqueuse.

La phase de complexation nécessite un milieu réactionnel aqueux pour permettre la dispersion des complexes. Il est toutefois possible de réaliser cette phase en mettant en contact la cyclodextrine et la substance à traiter sans ajouter d'eau, à condition toutefois que cette substance contienne elle-même de l'eau.

Lorsque la substance à traiter se présente sous la forme d'une poudre déshydratée -telle que par exemple de la poudre d'oeuf- il est alors indispensable d'ajouter de l'eau. Il faut enfin noter que lorsque la substance à traiter est une matière grasse solide à température normale, il convient par un traitement thermique approprié de la fluidiser avant de la mettre au contact de la cyclodextrine.

De préférence, la mise en contact est réalisée à une température voisine de 40°C. La température peut être comprise entre 20°C et 40°C, mais elle ne convient pas au traitement d'une substance solide à température normale et nécessitant d'être préalablement chauffée pour passer à l'état liquide ; de plus, la vitesse de la réaction est alors plus faible. La température peut être supérieure à 40°C et même atteindre 80°C. Il appartient à l'homme du métier de choisir alors une température qui ne conduise pas à une modification non désirée de la substance à traiter.

Le temps de contact requis pour la phase de complexation est très variable. Il est évidemment fonction, notamment, de la quantité de composés stéroïdiques contenus dans la matière à traiter et du pourcentage de composés stéroïques que l'on veut éliminer. Il peut atteindre plusieurs heures. Un temps de contact de 5 heures est particulièrement approprié. Ce contact est également facilité par une agitation avantageusement entretenue tout au long de cette phase de complexation.

De préférence, la bétacyclodextrine (ou β-cyclodextrine), constituée de sept unités glucopyranose, est utilisée. Des dérivés de la β-cyclodextrine, tels que la 2,6-di-O-méthyl - β - cyclodextrines, la 2,3,6-tri-O-méthyl-β-cyclodextrine et d'autres cyclodextrines telles que l' α -cyclodextrine dont les dimensions permettent également la formation de complexes d'inclusion, peuvent être mises en oeuvre.

Les quantités de cyclodextrine utilisées peuvent varier de 0,5% à 30 % en poids par rapport aux quantités de substance prélevée en vue de son traitement. La proportion de cyclodextrine à utiliser est fonction de la concentration en stérols et en dérivés de la substance à traiter et du rendement d'élimination désiré.

D'autres modes de réalisation de cette phase de complexation faisant intervenir une chromatographie liquide sur un phase solide sur laquelle est greffée la cyclodextrine ou l'utilisation de cyclodextrines réticulées ou modifiées conviennent.

Les complexes d'inclusion, formés au cours de cette première phase entre les molécules de stérols et de leurs dérivés et les molécules de cyclodextrine, sont ensuite éliminés par un procédé physique. Une centrifugation à 8000g s'avère particulièrement appropriée. Les complexes se localisent dans le culot d'où il est possible de les extraire. Si la substance à traiter est un corps gras, le surnageant comporte deux phases, une phase huileuse surmontant une phase aqueuse dans laquelle se localise la cyclodextrine en excès restée libre. Cet excès peut être élimine notamment par cristallisation fractionnée.

Les composées stéroïdiques, dont le procédé selon l'invention permet l'élimination à partir d'une substance d'origine biologique, sont les stérols non estérifiés, les stérols estérifiés -quels que soient la longueur de chaîne carbonée (4 à 26 atomes de carbone) et le degré d'insaturation (0 à 6 doubles liaisons) de l'acide gras- et les molécules qui en sont dérivées principalement après oxydation. Parmi ces molécules, on peut notamment citer des stérones telles que la Δ⁴ -cholesténe-3-one et la Δ^{3,5}-cholestadiène-7-one et des dérivés comportant des groupes hydroxyles tels que le cholestane -3β, 5, 6β-triol.

Le procédé selon l'invention convient au traitement de toutes les substances d'origine biologique. Il convient plus particulièrement au traitement des matières grasse d'origine animale ou végétale et des produits à base d'oeuf.

Le procédé selon l'invention permet en définitive d'éliminer au moins jusqu'à 80 % des stérols et de leurs dérivés contenus dans une substance à traiter, le pourcentage de stérols et de leurs dérivés éliminés étant notamment fonction de leur teneur au sein de la substance. Ce rendement peut encore être amélioré en procédant de la même manière à un deuxième puis éventuellement à un troisième traitement de la substance par un nouvel apport de cyclodextrine.

L'invention concerne également, selon un second aspect, les substances appauvries en stérols et en leurs dérivés que permet d'obtenir le procédé mis en oeuvre. Des exemples de réalisation de l'invention sont décrits, ci-dessous.

### EXEMPLE 1 - TRAITEMENT DE PRODUITS A BASE D'OEUF EN VUE D'EN REDUIRE LA TENEUR EN CHOLESTEROL

Trois matières premières, différentes quant à leur structure physio-chimique,
- du jaune d'oeuf en poudre (commercialisé par Avicole Breton CECAB Delaunay-France),
- du jaune d'oeuf frais isolé dans sa totalité de l'oeuf entier (oeufs commercialisés par Poitou Oeufs-France)
- de l'oeuf entier frais (oeufs commercialisés par Poitou Oeufs), ont été traitées.

### Mode opératoire

Les échantillons sont préparés en ajoutant soit 40 g d'eau distillée à 10 g de produit (poudre de jaune d'oeuf et oeuf entier frais) soit 60 g d'eau distillée à 10 g de produit (jaune d'oeuf frais).

A chaque échantillon ainsi préparé et homogénéisé, est ajoutée de la β-cyclodextrine (commericalisée par la Société ROQUETTE) sous la forme d'une poudre cristalline amorphe.

Pour chaque produit 4 échantillons sont utilisés; de la β-cyclodextrine (β-CD) leur est ajoutée de manière à ce que le rapport pondéral de la β-CD et du produit soit égal à 0,05, 0, 10, 0, 15, 0,20, 0,25 ou 0,30. (cf. Tableau 1)

Après une agitation sur une table mélangeante, les échantillons sont placés dans une enceinte réglée à 40°C et maintenus à cette température pendant 5 heures.

Pour chaque produit, un échantillon, destiné à servir de témoin, est soumis à un traitement ne différant de celui décrit ci-dessus qu'en ce que l'on n'ajoute pas de β-cyclodextrine.

Chaque échantillon est ensuite soumis à une centrifugation à 8000 g. Un culot contenant les complexes, formés entre la β-cyclodextrine et le cholestérol, surmontés d'un surnageant, est obtenu.

La teneur de cholestérol restant dans le surnageant de centrifugation est mesurée selon la méthode de C.S.J. SHEN et al. (Enzymatic determination of cholesterol in egg yolk - J. Assoc. Off. Anal. Chem., 65, n° 5, 1982, 1222-1224)

### Résultats

Les résultats sont portés dans le tableau I où chaque échantillon est repéré par le rapport β-CD/Produit

On constate que la mise en contact de 10 g de poudre de jaune d'oeuf de 40 g d'eau distillée et d'1 g de β-cyclodextrine a permis de réduire de 26 pour cent la teneur en cholestérol initiale en une seule extraction.

Il a été possible au cours de cet essai d'éliminer le cholestérol à raison de 74% pour la poudre du jaune d'oeuf, de 57% pour le jaune d'oeuf frais et 83 % pour l'oeuf entier frais.

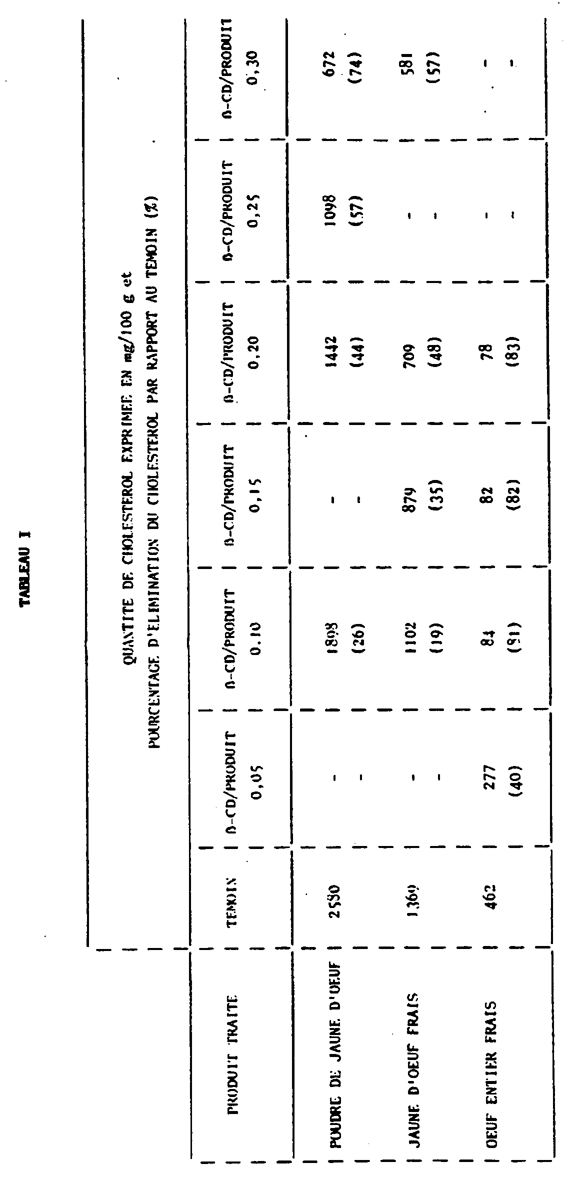

### Exemple 2 - TRAITEMENT D'UNE HUILE RAFFINEE DE TOURNESOL

De l'huile commercialisée sous la marque LESIEUR a été utilisée.

### Mode opératoire

Deux échantillons sont préparés. Pour chacun, à 10 g d'huile sont ajoutée de l'eau distillée (10 g) puis de la β-cyclodextrine (ROQUETTE), sous la forme d'une poudre cristalline amorphe, à raison de 500 mg pour un échantillon (ci-après échantillon β-CD/produit = 0,05) et de 1 g pour l'autre échantillon (ci-après échantillon β-CD/produit = 0,10).

Après une agitation sur table mélangeante, les échantillons sont placés dans une enceinte réglée à 40°C et maintenus à cette température pendant 5 heures.

Les échantillons sont ensuite soumis à une centrifugation à 8000 g. Un culot, contenant les complexes formés entre la β-cyclodextrine et les stérols, surmonté d'un surnageant, rit obtenu. Le surnageant comporte une phase aqueuse surmontée d'une phase huileuse. Cette dernière est recueillie.

Un échantillon, destiné à servir de témoin, subit un traitement ne différant du traitement décrit ci-dessus qu'en ce que l'on n'ajoute pas de β-cyclodextrine.

La teneur en stérols totaux de la phase huileuse est déterminée selon la méthode normalisée pour la détermination des stérols totaux dans les huiles et graisses préconisées par l'Union Internationale de Chimie Pure et Appliquée (M. NAUDET et al. - Revue Française des Corps gras, n° 4, Avril 1986, 167-170).

### Résultats

Les résultats sont portés dans le tableau II ; ils sont exprimés en rapportant les valeurs obtenues au β-sitostérol qui représente le stérol majeur de l'huile de tournesol.

**TABLEAU II**

| | QUANTITE DE STEROLS EXPRIMEE EN mg de β-sitostérol pour 100 g. | POURCENTAGE d'ELIMINATION % |
|---|---|---|
| échantillon témoin | 290 | - |
| échantillon β-CD/PRODUIT = 0,05 | 124 | 57 |
| échantillon β-CD/PRODUIT = 0,10 | 52 | 82 |

On constate qu'il a été possible d'éliminer 82% des stérols totaux initialement contenus dans l'huile.

### Exemple 3 - TRAITEMENT D'UNE MATIERE GRASSE ADDITIONNEE D'UN ESTER DE STEROL

### Principe

On traite une matière grasse à laquelle on a ajouté du stéarate de cholestérol en quantité telle que la masse de cholestérol équivalente soit de 9 à 15 fois supérieure à celle du cholestérol que contient "naturellement" cette matière grasse.

### Mode opératoire

4 échantillons sont préparés en solubilisant pour chacun d'eux du stéarate de cholestérol commercialisé par SIGMA à raison d'environ 30 mg pour deux d'entre eux (Essai 1 et Témoin 1) et d'environ 50 mg pour les deux autres (Essai 2 et Témoin 2) dans 10 g de matière grasse laitière anhydre contenant elle-même 2 mg du cholestérol et préalablement fluidifiée.

A chacun des 2 échantillons préparés pour les essais 1 et 2 sont ajoutés 10 g d'eau distillée et de la β-cyclodextrine ,ci-après β-CD, sous la forme d'une poudre cristalline amorphe (ROQUETTE) à raison de 503 mg pour l'un (Essai 1) et de 768 mg pour l'autre (Essai 2).

Après une agitation sur table mélangeante, les 4 échantillons sont placés dans une enceinte réglée à 40°C et maintenus à cette température pendant 5 heures.

Les échantillons sont ensuite soumis à une centrifugation à 8000 g. Un culot, contenant les complexes formés entre la β-cyclodextrine et le stéarate de cholestérol ou le cholestérol, surmonté d'un surnageant est obtenu. Le surnageant comporte une phase aqueuse surmontée d'une phase huileuse.

La phase huileuse est recueillie puis soumise à une saponification. Le cholestérol passe dans la partie insaponifiable dans laquelle il est dosé par une méthode enzymatique à l'aide d'un kit de diagnostic commercialisé par Boehringer Mannheim sous la référence 139-050.

**TABLEAU III**

| | MASSE β-CD mg | MASSE DE STEARATE DE CHOLESTEROL EFFECTIVEMENT INTRODUITE mg | MASSE DE CHOLESTEROL CALCULEE mg | MASSE DE CHOLESTEROL DOSEE mg | % CHOLESTEROL ELIMINE |
|---|---|---|---|---|---|
| TEMOIN 1 | 0 | 30,5 | 18,07 | 17,95 | 0 |
| ESSAI 1 | 503 | 30,6 | 18,13 | 12,45 | 31 |
| TEMOIN 2 | 0 | 50,8 | 30,10 | 30,95 | 0 |
| ESSAI 2 | 768 | 50,5 | 29,92 | 19,27 | 35 |

### Exemple 4 - TRAITEMENT D'UNE MATIERE GRASSE CONTENANT DES DERIVES OXYGENES DES STEROLS

### Mode opératoire

Une matière grasse laitière anhydre est soumise à plusieurs cycles de chauffage (150°C - 1h) entre lesquels on la laisse revenir à température ambiante.

A 10g de cette matière grasse ainsi préparée (ci-après matière grasse usagée) et préalablement fluidifiée, on ajoute 10g d'eau et 500 mg de β-cyclodextrine sous la forme d'une poudre cristalline amorphe (ROQUETTE)

Après une agitation sur table mélangeante, cet échantillon ainsi qu'un second échantillon traité de manière identique mais auquel n'a pas été ajoutée de la β-cyclodextrine, et destiné à servir de témoin, sont placés dans une enceinte réglée à 40°C et maintenus à cette température pendant 5 heures.

Les deux échantillons sont ensuite soumis à une centrifugation à 8000 g. Un culot, contenant les complexes formés entre les dérivés oxygénés des stérols et la β-cyclodextrine, surmonté d'un surnageant est obtenu. Le surnageant comporte une phase aqueuse surmonté d'une phase huileuse.

La phase huileuse est soumise à une saponification.

Les fractions insaponifiables sont analysées par chromatographie sur couche mince selon la méthode décrite par J.M., LUBY (Journal of Food Science, 51, n° 4, 1988, 904-907).

### Résultats

On constate sur la plaque pour la fraction correspondant à l'échantillon témoin la présence de deux taches correspondant à deux oxydes de cholestérol. Ces deux taches sont également retrouvées pour la fraction correspondant à l'échantillon préparé à partir de la matière grasse traitée, mais leur intensité est très atténuée.

### Exemple 5 - TRAITEMENT D'UNE MATIERE GRASSE CONTENANT UNE STERONE

### Mode opératoire

De la matière grasse laitière anhydre, préalablement soumise à l'action d'une souche bactérienne biosynthétisant une cholestérol-oxydase extra-cellulaire, contenant 240 mg de Δ⁴-cholesténe-3-one pour 100 g est mise en oeuvre (et ci-près appelée MGLA-BIO).

Deux échantillons (essais 1 et 2) sont préparés. Pour chacun d'eux, à 10 g de cette matière grasse sont ajoutés 10 g d'eau et 500 mode de β-cyclodextrine sous la forme d'une poudre cristalline amorphe (ROQUETTE).

Après une agitation sur table mélangeante, les deux échantillons, ainsi que deux autres échantillons préparés de manière identique mais auxquels n'a pas été ajoutée de la β-cyclodextrine, sont soumis à une centrifugation à 8000 g. Un culot, contenant les complexes d'inclusion formés avec la β-cyclodextrine, surmonté d'un surnageant, est obtenu. Le surnageant comporte une phase aqueuse surmontée d'une phase huileuse.

La phase huileuse est recueillie ; 2 g en sont prélevés et portés dans un mélange de méthanol et de chlorure de méthylène (50/50, v/v). Le volume de la solution A ainsi préparée est complété à 100 ml avec le même mélange. On obtient ainsi une solution B que l'on analyse par chromatographie liquide à haute performance.

Une colonne en acier de 25 cm de longueur et de 4,6 mm de diamètre interne, contenant du gel Spherisorb RP 18 (colonne prête à l'emploi du type S 5 0DS 2 commercialisée par Phase Sep sous la référence 820 019) et une précolonne d'1,5 cm de longueur et de 3,2 mm de diamètre intérieur contenant une phase C18 de 7 microns (colonne prête à l'emploi commercialisée par Touzart et Matignon sous la référence 014 380 12) sont utilisées.

Une prise d'essai de 20 microlitres de la solution B est injectée. L'élution est réalisée à l'aide d'une phase mobile constituée de 95 volumes de méthanol et de 5 volumes de chlorure de méthylène que l'on fait circuler, pendant 15 minutes avec un débit de 1,0 ml par minute. La Δ⁴-cholesténe-3-one donne un pic principal avec un temps de rétention voisin de 13 minutes. L'élution est poursuivie pour permettre le lavage de la phase stationnaire et son retour à son équilibre initial.

### Résultats

Les résultats sont portés dans le tableau IV.

**TABLEAU IV**

| | ECHANTILLON TEMOIN | | ECHANTILLON β-CYCLODEXTRINE/MGLA BIO = 0,05 | |
|---|---|---|---|---|
| | 1 | 2 | ESSAI 1 | ESSAI 2 |
| Δ ⁴-Cholestène-3-one mg pour 100 g | 238 | 239 | 40 | 39 |
| Pourcentage d'élimination | 0 | 0 | 83 | 84 |

On constate que pour chacun des deux essais, plus de 80% de la stérone ont pu être éliminés.

## Revendications

1. Procédé d'élimination du cholestérol contenu dans une substance d'origine biologique choisie parmi les matières grasses d'origine animale et les produits à base d'oeuf, caractérisé en ce que ladite substance à l'état liquide ou fluidifié est mise en contact avec une cyclodextrine, en milieu aqueux, ce contact est prolongé sous agitation de façon à permettre la formation de complexes entre le cholestérol et la cyclodextrine, puis lesdits complexes sont sépares,
à l'exclusion de son application à l'élimination du cholestérol d'une matière grasse d'origine animale qui serait effectuée sous atmosphère non oxydante, avec un temps de contact de 30 minutes à 10 heures.

2. Procédé selon la revendication 1, caractérisé en ce que le contact est réalisé à une température au plus égale à 80° C.

3. Procédé selon la revendication 1, caractérisé en ce que le contact est réalisé à 40° C pendant 5 heures.

4. Procédé selon l'une quelconque des revendications 1 à 3, caractérisé en ce que de la β-cyclodextrine est utilisée.

5. Procédé selon l'une quelconque des revendications 1 à 4, caractérisé en ce que ladite substance d'origine biologique est une matière grasse d'origine animale.

6. Procédé selon l'une quelconque des revendications 1 à 4, caractérisé en ce que ladite substance d'origine biologique est un produit à base d'oeuf.

## Claims

1. Method of eliminating cholesterol contained in a substance of biological origin selected in the group consisting of animal fat and egg-based products, characterised in that the said substance, in liquid or fluidified state, is contacted with a cyclodextrin, in an aqueous medium, the contact is maintained, with stirring, to allow complexes to form between the cholesterol and the cyclodextrin, then the complexes are separated,
with the exception of its application to the elimination of cholesterol from an animal fat which would be carried out in a non-oxidising atmosphere, with a contact time of 30 minutes to 10 hours.

2. Method according to claim 1, characterised in that the contacting is carried out at a temperature of at most 80°C.

3. Method according to claim 1, characterised in that the contacting is carried out at 40°C for 5 hours.

4. Method according to any one of claims 1 to 3, characterised in that β-cyclodextrin is used.

5. Method according to any one of claims 1 to 4, characterised in that the substance of biological origin is an animal fat.

6. Method according to any one of claims 1 to 4, characterised in that the substance of biological origin is an egg-based product.

## Patentansprüche

1. Verfahren zur Abtrennung von Cholesterin, das in Substanzen biologischen Ursprungs, ausgewählt unter Fettstoffen tierischen Ursprungs und Produkten auf Eibasis enthalten ist, dadurch gekennzeichnet, daß die flüssige oder verflüssigte Substanz in wäßrigem Medium mit einem Cyclodextrin in Kontakt gebracht wird, wobei der Kontakt unter Rühren derart lange durchgeführt wird, daß sich Komplexe zwischen den Steroidverbindungen und dem Cyclodextrin bilden können, und die gebildeten Komplexe anschließend abgetrennt werden,
unter Ausschluß seiner Anwendung zur Abtrennung von Cholesterin aus Fettstoffen tierischen Ursprungs unter einer nichtoxidierenden Atmosphäre bei einer Kontaktzeit von 30 min bis 10 h.

2. Verfahren nach Anspruch 1, dadurch gekennzeichnet, daß der Kontakt bei einer Temperatur von höchstens 80°C durchgeführt wird.

3. Verfahren nach Anspruch 1, dadurch gekennzeichnet, daß der Kontakt bei 40°C 5h vorgenommen wird.

4. Verfahren nach einem der Ansprüche 1 bis 3, dadurch gekennzeichnet, daß β-Cyclodextrin verwendet wird.

5. Verfahren nach einem der Ansprüche 1 bis 4, dadurch gekennzeichnet, daß die Substanz biologischen Ursprungs ein Fettstoff tierischen Ursprungs ist.

6. Verfahren nach einem der Ansprüche 1 bis 4, dadurch gekennzeichnet, daß die Substanz biologischen Ursprungs ein Produkt auf Eibasis ist.
